# EUROPÄISCHE PATENTSCHRIFT

(11) **EP 1 153 790 B1**
(45) Veröffentlichungstag und Bekanntmachung des Hinweises auf die Patenterteilung: **28.07.2004**
(21) Anmeldenummer: 01111021.0
(22) Anmeldetag: 08.05.2001
(51) Int. Cl.: B60N 3/10

(54) **Halter für ein Getränkegefäss**
Holder for a beverage container
Support pour un récipient à boissons

(30) Priorität: 13.05.2000 DE 10023574
(43) Veröffentlichungstag der Anmeldung: 14.11.2001
(73) Patentinhaber: fischerwerke Artur Fischer GmbH & Co. KG, 72178 Waldachtal (DE)
(72) Erfinder: Schaal, Falk, 72275 Alpirsbach (DE)

(56) Entgegenhaltungen:
- WO-A-99/60904
- DE-A- 19 653 715
- US-A- 4 783 037
- US-A- 5 673 891

## Beschreibung

Die Erfindung betrifft einen Halter für ein Getränkegefäß mit den Merkmalen des Oberbegriffs des Anspruchs 1. Der Halter ist zum Einbau in einen Kraftwagen vorgesehen. Das in den Halter einstellbare Getränkegefäß kann eine Getränkedose, ein Becher, eine Tasse oder dgl. sein.

Aus der gattungsbildenden DE 196 53 715 C2 ist ein Halter für ein Getränkegefäß bekannt, der eine Einstellöffnung zum Einstellen des Getränkegefäßes aufweist. Um eine Größe der Einstellöffnung an unterschiedliche Durchmesser verschiedener Getränkegefäße anpassen zu können, weist der bekannte Halter ein sichelförmiges Ausgleichelement auf, welches mittels einer Führung in die Einstellöffnung hinein verschieblich am Halter geführt ist. Durch Verschieben des Ausgleichelements lässt sich eine lichte Weite der Einstellöffnung verändern und damit an den Durchmesser des jeweils eingestellten Getränkegefäßes anpassen. Um das Ausgleichelement in seiner jeweiligen Stellung zu arretieren weist der bekannte Halter eine als Rasteinrichtung ausgebildete Feststelleinrichtung auf. Die Verstellung des Ausgleichelements erfolgt beim bekannten Halter manuell, die Arretierung des Ausgleichelements muss dazu gelöst und das Ausgleichelement anschließend von Hand in die jeweilige Position verschoben werden.

Der Erfindung liegt die Aufgabe zugrunde, einen Halter für ein Getränkegefäß mit einer vereinfachten Anpassung der Größe seiner Einstellöffnung an den Durchmesser eines eingestellten Getränkegefäßes zu schaffen.

Diese Aufgabe wird erfindungsgemäß durch die Merkmale des Anspruchs 1 gelöst. Das Ausgleichelement des erfindungsgemäßen Halters mit den Merkmalen des Anspruchs 1 weist ein Betätigungselement auf, das beim Bewegen des Ausgleichelements in die Einstellöffnung hinein an einem in die Einstellöffnung eingestellten Getränkegefäß anstößt.

Dabei betätigt das Betätigungselement die Feststelleinrichung und arretiert auf diese Weise das Ausgleichelement in seiner Position. Beim erfindungsgemäßen Halter wird also das Ausgleichelement durch Verschieben in Richtung eines in die Einstellöffnung des Halters eingestellten Getränkegefäßes bei Annäherung an das Getränkegefäß selbsttätig durch das Betätigungselement arretiert. Die Arretierposition des Ausgleichelements ist vorzugweise so gewählt, dass das Ausgleichelement einen geringen Abstand von dem in die Einstellöffnung des Halters eingestellten Getränkegefäß aufweist. Dieser Abstand ermöglicht ein problemloses Einstellen des Getränkegefäßes in den Halter. Zugleich ist der Abstand zwischen dem Ausgleichelement und dem in die Einstellöffnung eingestellten Getränkegefäß so klein gewählt, dass das Getränkegefäß sicher gegen Umkippen in der Einstellöffnung gehalten ist. Weitere Vorteile des erfindungsgemäßen Halters außer der vereinfachten Einstellung der Arretierposition seines Ausgleichelements sind, dass der Halter aus wenigen Teilen herstellbar ist und eine geringe Bauhöhe aufweisen kann.

Die Führung des Ausgleichelements kann beispielsweise als Schwenklagerung ausgebildet sein. Bei einer Ausgestaltung der Erfindung weist der Halter eine Schiebeführung für das Ausgleichelement auf und das Ausgleichelement ist als Schieber ausgebildet.

Die Feststelleinrichtung zum Arretieren des Ausgleichelements kann beispielsweise eine Klemmeinrichtung aufweisen. Bei einer Ausgestaltung der Erfindung ist die Feststelleinrichtung als Rasteinrichtung ausgebildet.

Das Betätigungselement zum Betätigen der Feststelleinrichtung und Arretieren des Ausgleichelements weist bei einer Ausgestaltung der Erfindung eine Schwenklagerung auf, mit der das Betätigungselement schwenkbar am Ausgleichelement gelagert ist. Wird das Ausgleichelement in Richtung eines in die Einstellöffnung eingestellten Getränkegefäßes bewegt, stößt das Betätigungselement gegen das Getränkegefäß und wird beim Weiterbewegen des Ausgleichelements verschwenkt. Diese Schwenkbewegung des Betätigungselements wird zur Betätigung der Feststelleinrichtung und Arretierung des Ausgleichelements genutzt.

Bei einer Weiterbildung weist das Betätigungselement eine Rastklinke auf, die in Eingriff mit einem feststehenden Rastelement der Rasteinrichtung gelangt, wenn das Betätigungselement gegen ein in die Einstellöffnung eingestelltes Getränkegefäß stößt und dadurch verschwenkt wird. Die in Eingriff mit dem Rastelement befindliche Rastklinke arretiert das Ausgleichelement in seiner Position.

Bei einer Ausgestaltung der Erfindung weist das Ausgleichelement eine Rasteinrichtung auf, die das Ausgleichelement in einer Grundstellung hält, in der das Ausgleichelement die Einstellöffnung des Halters nicht verkleinert. Diese Rasteinrichtung kann Teil der vorstehend erläuterten Rasteinrichtung sein, die das Ausgleichelement in seiner in die Einstellöffnung hinein verschobenen Position arretiert. Die Rasteinrichtung, die das Ausgleichelement in der Grundstellung hält, kann auch separat von der vorgenannten Rasteinrichtung sein. Die Rasteinrichtung, die das Ausgleichelement in der Grundstellung hält, wird dadurch entriegelt, dass beim Einstellen eines Getränkegefäßes in die Einstellöffnung des Halters das Getränkegefäß gegen das Betätigungselement stößt. Nach der Entriegelung der Rasteinrichtung ist das Ausgleichelement in die Einstellöffnung hinein, also in Richtung des Getränkegefäßes, beweglich. Vorzugsweise erfolgt die Bewegung des Ausgleichelements in die Einstellöffnung hinein mittels eines Federelements. Diese Ausgestaltung der Erfindung hat den Vorteil, dass die Anpassung der Größe der Einstellöffnung an den Durchmesser eines in die Einstellöffnung eingestellten Getränkegefäßes vollautomatisch erfolgt. Beim ersten Einstellen des Getränkegefäßes in die Einstellöffnung befindet sich das Ausgleichelement in seiner aus der Einstetlöff nung heraus bewegten Grundstellung. Beim Einstellen des Getränkegefäßes in die Einstellöffnung des Halters stößt das Getränkegefäß gegen das Betätigungselement, das dabei die Rasteinrichtung entriegelt, die das Ausgleichelement in seiner Grundstellung hält. Das Federelement bewegt das Ausgleichelement in Richtung des Getränkegefäßes. Das gegen das Getränkegefäß stoßende Betätigungselement betätigt die Feststelleinrichtung nach einer vom Federelement bewirkten Annäherung des Ausgleichelements an das Getränkegefäß und arretiert das Ausgleichelement in der an das Getränkegefäß angenäherten Position, in der die lichte Weite der Einstellöffnung so klein ist, dass das eingestellte Getränkegefäß sicher gegen Umkippen gehalten ist. In der arretierten Position weist das Ausgleichelement einen geringen Abstand vom Getränkegefäß auf, der ein einfaches Einstellen des Getränkegefäßes in die Einstellöffnung des erfindungsgemäßen Halters ermöglicht. Nach der Arretierung des Ausgleichelements in der genannten Position bewegt sich das Ausgleichelement auch bei einer Entnahme des Getränkegefäßes aus der Einstellöffnung nicht, sondern bleibt in seiner Position arretiert, so dass sich das Getränkegefäß problemlos wieder in die Einstellöffnung einstellen lässt. Die durch das erstmalige Einstellen des Getränkegefäßes in die Einstellöffnung des Halters bewirkte Anpassung der lichten Weite der Einstellöffnung an den Durchmesser des Getränkegefäßes bleibt also erhalten. Erst zur Anpassung an einen anderen Durchmesser eines anderen Getränkegefäßes muss das Ausgleichelement des erfindungsgemäßen Halters in seine Grundstellung zurückbewegt werden, in der es von der Rasteinrichtung gehalten wird.

Die Erfindung wird nachfolgend anhand eines in der Zeichnung dargestellten Ausführungsbeispiels näher erläutert. Es zeigen:
- Figuren 1a - c: einen erfindungsgemäßen Halter in perspektivischer Darstellung schräg von oben in einer Grundstellung (Figur 1a), einer Zwischenstellung (Figur 1b) und einer arretierten Stellung (Figur 1c);
- Figuren 2a - c: eine perspektivische Darstellung des Halters aus Figuren 1a - c schräg von unten in einer aufgebrochenen Darstellung, wobei die in Figuren 2a - c dargestellten Stellungen denjenigen aus Figuren 1a - c entsprechen; und
- Figuren 3 - 6: den Halter aus Figuren 1 und 2 in einem schematisierten Längsschnitt in unterschiedlichen Stellungen.

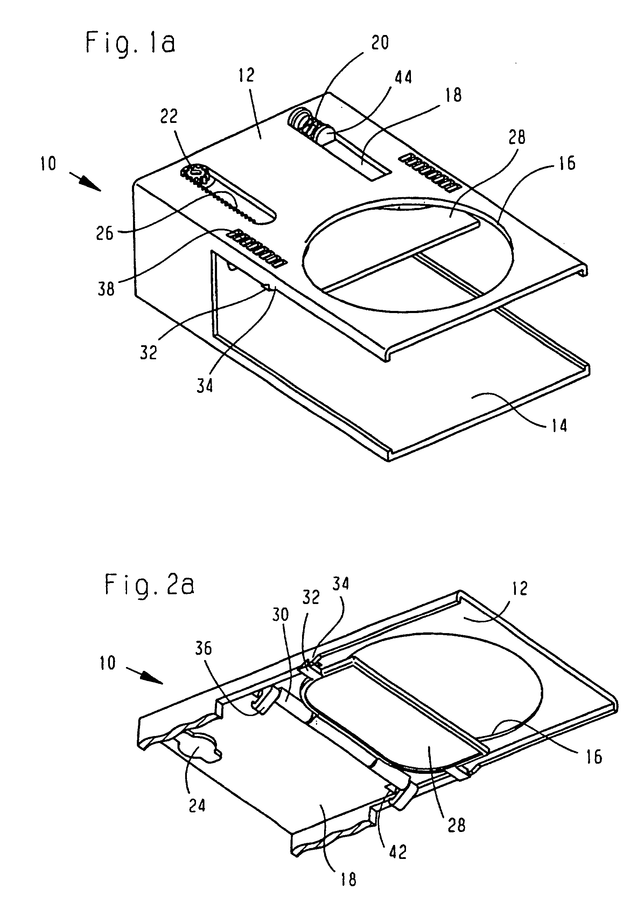

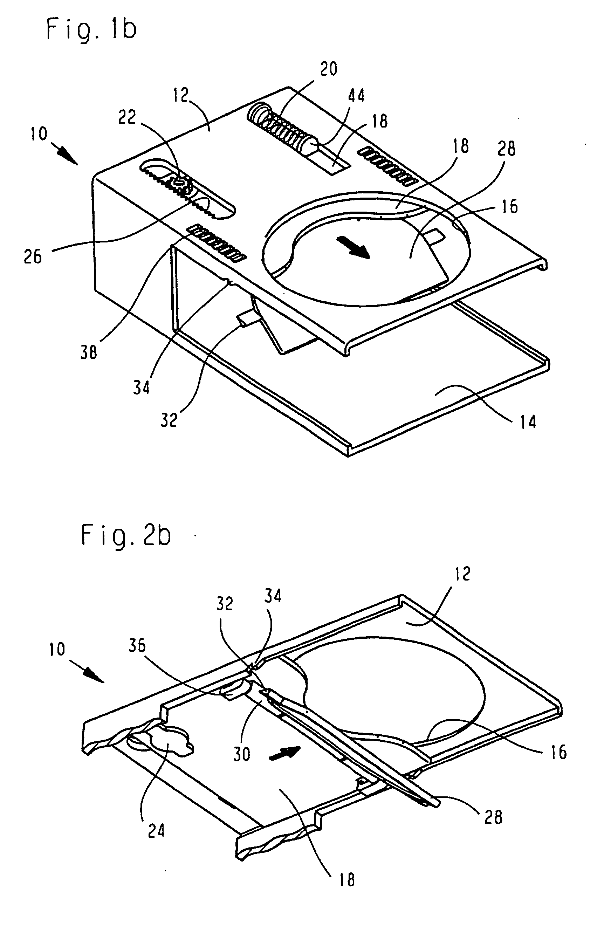

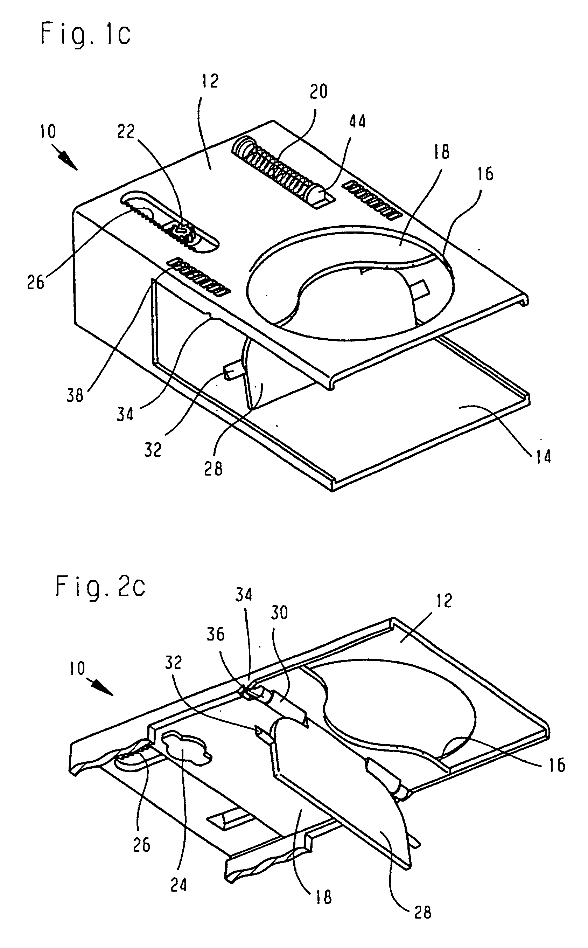

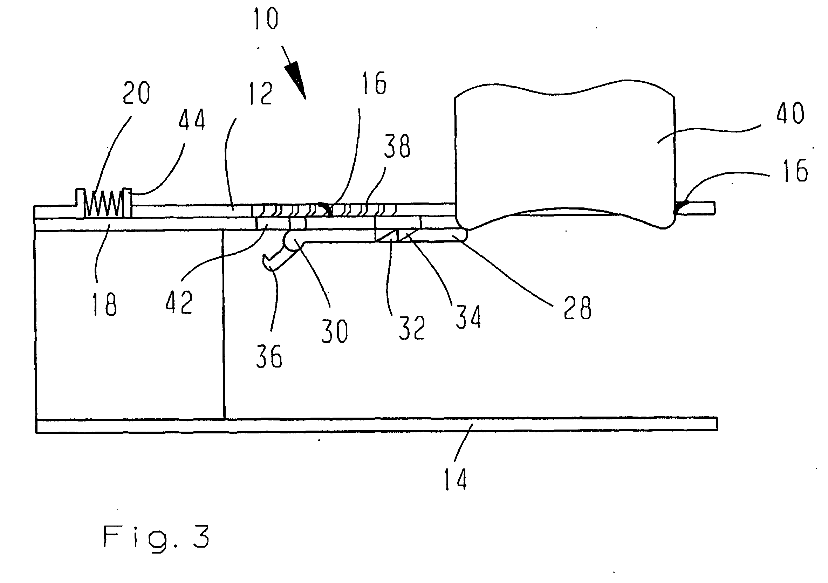

Der in Figuren 1 und 2 dargestellte, erfindungsgemäße Halter 10 weist ein Gehäuse mit einer Deckplatte 12 und einer mit Abstand parallel darunter angeordneten Grundplatte 14 auf. Die Deckplatte 12 ist mit einer kreisrunden Einstellöffnung 16 zum Einstellen eines in Figuren 1 und 2 nicht dargestellten Getränkegefäßes versehen. Das Getränkegefäß kann beispielsweise eine Getränkedose, ein Becher oder eine Tasse sein. An einer Unterseite der Deckplatte 12 ist ein Ausgleichelement 18 verschieblich geführt angeordnet, das in Figuren 2a - c gut erkennbar ist, in denen die Deckplatte 12 von unten zu sehen und die Grundplatte 14 weggebrochen ist. Das Ausgleichelement 18 ist als plattenförmiger Schieber 18 ausgebildet und wird nachfolgend als solcher bezeichnet. Der Schieber 18 ist wie insbesondere in Figuren 1b und c gut erkennbar, in die Einstellöffnung 16 hinein verschiebbar, so dass er eine lichte Weite der Einstellöffnung 16 verkleinert. Die Verkleinerung der lichten Weite der Einstellöffnung 16 dient dem Zweck der Anpassung an den Durchmesser des einzustellenden Getränkegefäßes. In einer in Figuren 1a und 2a dargestellten Grundstellung ist der Schieber 18 aus der Einstellöffnung 16 heraus bewegt und verkleinert diese nicht.

Ein als Schraubendruckfeder ausgebildetes Federelement 20 drückt den Schieber 18 in die Einstellöffnung 16 hinein. Ein Zahnrad 22 eines am Schieber 18 angebrachten Rotationsdämpfers 24 kämmt mit einer Zahnstange 26, die an der Deckplatte 12 des Gehäuses des erfindungsgemäßen Halters 10 angeordnet ist und dämpft die Verschiebebewegung des Schiebers 18.

Im Bereich eines der Einstellöffnung 16 zugewandten Randes des Schiebers 18 weist der Schieber 18 eine Betätigungsklappe 28 auf, die mittels eines Scharniers 30 schwenkbar am Schieber 18 gelagert ist. Das Scharnier 30 bildet eine Schwenklagerung der Betätigungsklappe 28. In der Grundstellung des Schiebers 18 ragt die Betätigungsklappe 28 wie in Figur 1a zu sehen in die Einstellöffnung 16 hinein, die Betätigungsklappe 28 verdeckt die Einstellöffnung 16 teilweise. Ein in der Zeichnung nicht sichtbares, im Scharnier 30 angeordnetes Torsionsfederelement drückt die Betätigungsklappe 28 gegen eine Unterseite der Deckplatte 12 des Gehäuses.

Von der Betätigungsklappe 28 stehen auf beiden Seiten im Querschnitt dreiecksförmige Rastzapfen 32 ab, die in der Grundstellung des Schiebers 18 mit Rastnasen 34 in Eingriff stehen, die von der Deckplatte 12 nach unten abstehen. Die Rastzapfen 32 und die Rastnasen 34 bilden eine Rasteinrichtung 32, 34, die den Schieber 18 gegen die Kraft des Federelements 20 in der Grundstellung hält. Diese Rasteinrichtung 32, 34 wird nachfolgend auch als erste Rasteinrichtung bezeichnet werden.

An beiden Seiten des Scharniers 30, das die Betätigungsklappe 28 schwenkbar mit dem Schieber 18 verbindet, weist der erfindungsgemäße Halter 10 Rastklinken 36 auf. Diese Rastklinken 36 sind drehfest an Enden einer in der Zeichnung nicht sichtbaren Welle des Scharniers 30 angebracht, die drehfest mit der Betätigungsklappe 28 ist. Die Rastklinken 36 schwenken also mit der Betätigungsklappe 28 mit. Die Rastklinken 36 stehen schräg nach unten vom Schieber 18 ab, wenn, wie in Figuren 1a und 2a dargestellt, die Betätigungsklappe 28 an der Unterseite der Deckplatte 12 anliegt. Wird die Betätigungsklappe 28 von der Deckplatte 12 weg nach unten verschwenkt, verschwenken die Rastklinken 36 nach oben.

Die Rastklinken 36 wirken mit Rastelementen 38 zusammen, die als kleine Öffnungen in der Deckplatte 12 ausgebildet sind. Die Rastelemente 38 sind in zwei Längsseitenbereichen der Deckplatte 12 angeordnet. Dabei sind auf jeder Seite eine Anzahl Rastelemente 38 in einer Reihe in Verschieberichtung des Schiebers 18 angeordnet. Die Rastklinken 36 und die Rastelemente 38 bilden eine Rasteinrichtung 36, 38, die nachfolgend als weitere Rasteinrichtung 36, 38 bezeichnet werden wird.

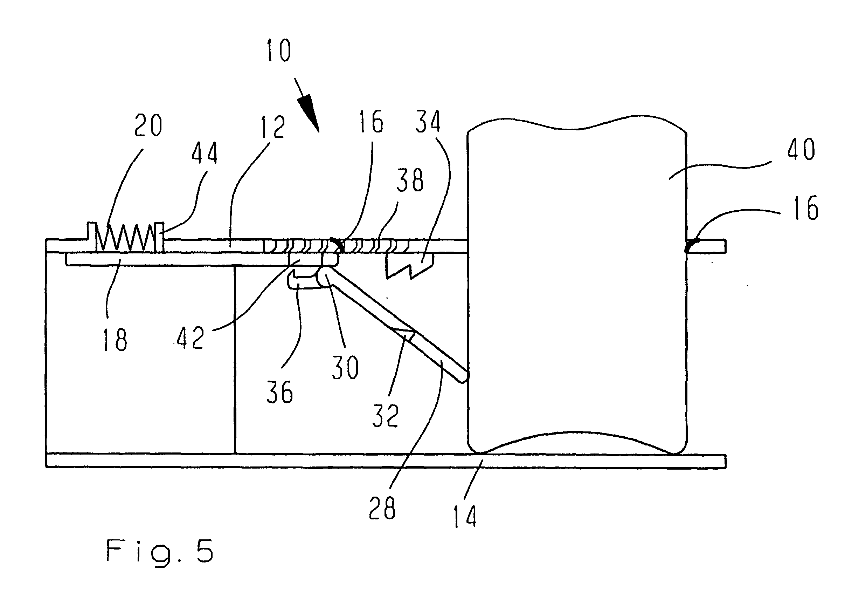

Die Funktion des erfindungsgemäßen Halters 10 wird nachfolgend anhand Figuren 3 - 6 erläutert. Dabei wird davon ausgegangen, dass wie in Figuren 1a, 2a und 3 dargestellt, sich der Schieber 18 zunächst in seiner Grundstellung befindet, in der er die Einstellöffnung 16 nicht verdeckt. Die Einstellöffnung 16 ist in Figuren 3 - 6 mit Begrenzungsstrichen 16 angedeutet, sie befindet sich seitlich der Rastelemente 38 außerhalb der Schnittebene. Die Betätigungsklappe 28 wird von ihrem in der Zeichnung nicht sichtbaren Torsionsfederelement gegen die Unterseite der Deckplatte 12 gedrückt und verdeckt die Einstellöffnung 16 teilweise. Die seitlich von der Betätigungsklappe 28 abstehenden Rastzapfen 32 befinden sich in Eingriff mit den feststehenden Rastnasen 34 und halten den Schieber 18 gegen die Kraft des Federelements 20 in der Grundstellung.

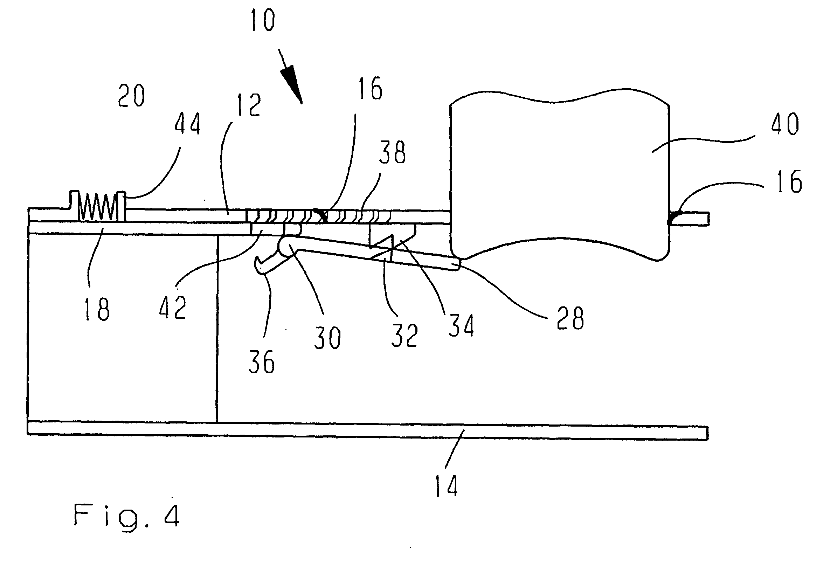

Wird nun ein Getränkegefäß 40, beispielsweise die in Figur 3 angedeutete Getränkedose 40, in die Einstellöffnung 16 eingestellt, stößt sie mit ihrem Boden auf die Betätigungsklappe 28. Die Getränkedose 40 schwenkt die Betätigungsklappe 28 nach unten, so dass zunächst die Rastzapfen 32 außer Eingriff von den Rastnasen 34 gelangen, wie in Figur 4 dargestellt. Dadurch ist die Rasteinrichtung 32, 34, die den Schieber 18 gegen die Kraft des Federelements 20 in der Grundstellung hält, gelöst und das Federelement 20 schiebt den Schieber 18 in Richtung der Getränkedose 40.

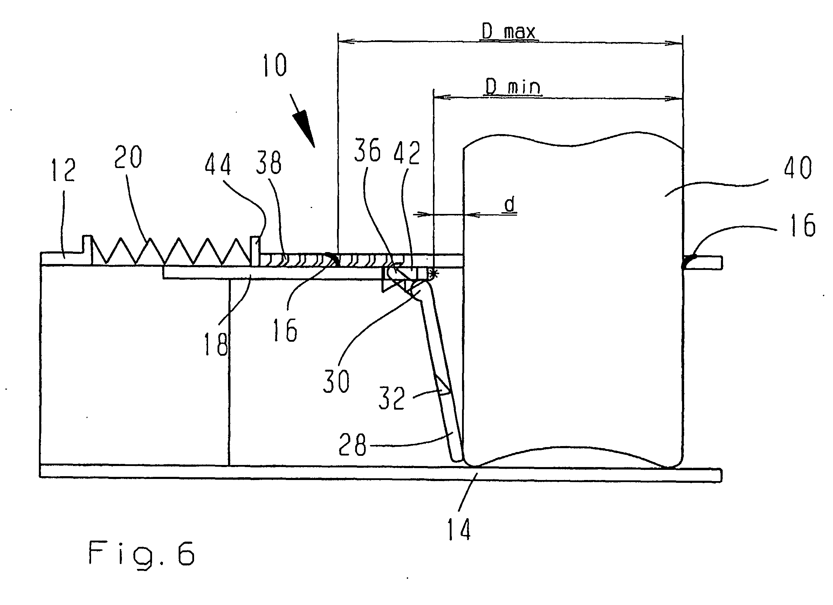

Durch die Verschiebung des Schiebers 18 in Richtung der Getränkedose 40 schwenkt die an der Getränkedose 40 anstoßende Betätigungsklappe 28 weiter nach unten. Bei dieser Schwenkbewegung der Betätigungsklappe 28 nach unten schwenken die mit der Betätigungsklappe 28 drehfesten Rastklinken 36 nach oben. Eine Zwischenstellung der Betätigungsklappe 28 ist in Figuren 1b, 2b und 5 dargestellt. Ist die Betätigungsklappe 28 wie in Figuren 1c, 2c und 6 dargestellt vollständig nach unten verschwenkt, so gelangen die Rastklinken 36 durch Ausnehmungen 42 des Schiebers 18 hindurch in Eingriff mit jeweils einem der Rastelemente 38 und arretieren auf diese Weise den Schieber 18 gegen die Kraft des Federelements 20 in seiner Position. Die Betätigungsklappe 28 betätigt also die erste Rasteinrichtung 36, 38. Der Schwenkwinkel der Betätigungsklappe 28 beträgt etwas weniger als 90°, die Betätigungsklappe 28 steht steil schräg nach unten, wenn sich die Rastklinken 36 in Eingriff mit den Rastelementen 38 befinden. Wie in Figur 6 zu sehen weist der Schieber 18 in seiner arretierten Position einen Abstand d von der Getränkedose 40 auf, drückt also nicht gegen die Getränkedose 40. Der Abstand d zwischen dem Schieber 18 und der Getränkedose 40 ist so klein, dass die in die Einstellöffnung 16 eingestellte Getränkedose 40 sicher gegen Umkippen im Halter 10 gehalten ist. Durch den Schieber 18 lässt sich die lichte Weite der Einstellöffnung 16 in durch die Abstände der Rasteinrichtungen 38 vorgegebenen Stufen zwischen einer größten Öffnungsweite D max und einer kleinsten Öffnungsweite D min verstellen, wobei die größte Öffnungsweite D max dem Durchmesser der Einstellöffnung 16 entspricht.

Die Rastklinken 36 sind mit einem hakenförmigen Ende so ausgebildet, dass sie die Betätigungsklappe 28 in der nach unten verschwenkten Stellung halten, wenn sie sich in Eingriff mit den Rastelementen 38 befinden und der Schieber vom Federelement 20 in Richtung der Getränkedose 40 gedrückt wird. Die Betätigungsklappe 28 schwenkt also nicht nach oben, wenn die Getränkedose 40 aus der Einstellöffnung 16 entnommen wird. Der Schieber 18 behält also die Position bei, in der er arretiert ist. Der Abstand d zwischen dem arretierten Schieber 18 und der Getränkedose 40 lässt ein problemloses, erneutes Einstellen der Getränkedose 40 in die Einstellöffnung 16 zu.

Soll die mit dem Schieber 18 eingestellte Öffnungsweite der Einstellöffnung 16 verändert werden, wird der Schieber 18 an einer von ihm nach oben abstehenden Fingerdruckplatte 44 gegen die Kraft des Federelements 20 in seine Grundstellung zurückverschoben. Dabei gelangen die Rastklinken 36 außer Eingriff von den Rastelementen 38 und die Betätigungsklappe 28 wird von ihrem in der Zeichnung nicht sichtbaren Torsionsfederelement nach oben geschwenkt. In der Grundstellung des Schiebers 18 rasten die seitlich von der Betätigungsklappe 28 abstehenden Rastzapfen 32 in die feststehenden Rastnasen 34 ein.

## Patentansprüche

1. Halte (10) für ein Getränkegefäß, mit einer Einstellöffnung (16) zum Einstellen des Getränkegefäßes, mit einem Ausgleichelement (18), das mit einer Führung in die Einstellöffnung (16) hinein beweglich am Halter (10) geführt ist, und mit einer Feststelleinrichtung (36, 38), mit der das Ausgleichelement (18) in unterschiedlich weit in die Einstellöffnung (16) hinein bewegten Positionen am Halter (10) arretierbar ist, **dadurch gekennzeichnet, dass** das Ausgleichelement (18) ein Betätigungselement (28) aufweist, das beim Bewegen des Ausgleichelements (18) in die Einstellöffnung (16) hinein an einem in die Einstellöffnung (16) eingestellten Getränkegefäß (40) anstößt und dadurch die Feststelleinrichtung (36, 38) betätigt und das Ausgleichelement (18) arretiert.

2. Halter nach Anspruch 1, **dadurch gekennzeichnet, dass** die Führung des Ausgleichelements (18) eine Schiebeführung ist und dass das Ausgleichelement (18) einen Schieber (18) aufweist.

3. Halter nach Anspruch 1, **dadurch gekennzeichnet, dass** die Feststelleinrichtung (36, 38) als Rasteinrichtung (36, 38) ausgebildet ist.

4. Halter nach Anspruch 1, **dadurch gekennzeichnet, dass** das Betätigungselement (28) eine Schwenklagerung (30) aufweist, mit der es schwenkbar am Ausgleichelement (18) gelagert ist.

5. Halter nach Anspruch 4, **dadurch gekennzeichnet, dass** das Betätigungselement (28) eine Rastklinke (36) aufweist, die beim Verschwenken des Betätigungselements (28) in Eingriff mit einem Rastelement (38) der Rasteinrichtung (36, 38) gelangt.

6. Halter nach Anspruch 1, **dadurch gekennzeichnet, dass** das Ausgleichelement (18) eine Rasteinrichtung (32, 34) aufweist, die das Ausgleichelement (18) in einer nicht in die Einstellöffnung (16) hinein verschobenen Grundstellung hält und die entriegelt wird, wenn beim Einstellen des Getränkegefäßes (40) in die Einstellöffnung (16) das Getränkegefäß (40) gegen das Betätigungselement (28) stößt.

7. Halter nach Anspruch 1, **dadurch gekennzeichnet, dass** der Halter (10) ein Federelement (20) aufweist, das das Ausgleichelement (18) in die Einstellöffnung (16) hinein bewegt.

## Claims

1. Holder (10) for a drinks container, having an insertion opening (16) for insertion of the drinks container, having a compensating element (18) which is movably guided, at the holder (10), into the insertion opening (16) by a guide means, and having a securing device (36, 38) by means of which the compensating element (18) is arranged to be locked at the holder (10) in positions in which it has been moved to different extents into the insertion opening (16), **characterised in that** the compensating element (18) has an actuating element (28), which, on movement of the compensating element (18) into the insertion opening (16), bears against a drinks container (40) inserted in the insertion opening (16) and, as a result, actuates the securing device (36, 38) and locks the compensating element (18).

2. Holder according to claim 1, **characterised in that** the guide means for the compensating element (18) is a slide arrangement; and the compensating element (18) has a slider (18).

3. Holder according to claim 1, **characterised in that** the securing device (36, 38) is in the form of a latching device (36, 38).

4. Holder according to claim 1, **characterised in that** the actuating element (28) has a pivotal mounting (30), by means of which it is pivotally mounted on the compensating element (18).

5. Holder according to claim 4, **characterised in that** the actuating element (28) has a latching detent (36), which, on pivoting of the actuating element (28), comes into engagement with a latching element (38) of the latching device (36, 38).

6. Holder according to claim 1, **characterised in that** the compensating element (18) has a latching device (32, 34) which holds the compensating element (18) in an initial position wherein it is not displaced into the insertion opening (16) and which is unlatched when, on insertion of the drinks container (40) into the insertion opening (16), the drinks container (40) bears against the actuating element (28).

7. Holder according to claim 1, **characterised in that** the holder (10) has a spring element (20), which moves the compensating element (18) into the insertion opening (16).

## Revendications

1. Support (10) pour un récipient à boissons, avec un orifice de réglage (16) permettant d'ajuster le récipient pour boissons, avec un élément de compensation (18) qui est conduit, de manière mobile, à l'aide d'une glissière dans l'orifice de réglage (16) sur le support (10), et avec un dispositif de blocage (36, 38), grâce auquel l'élément de compensation (18) peut être bloqué sur le support (10), dans des positions déplacées dans l'orifice de réglage (16) à différentes distances, **caractérisé en ce que** l'élément de compensation (18) comprend un dispositif d'actionnement (28), qui s'appuie contre un récipient à boissons (40) ajusté dans l'orifice de réglage (16), lors du déplacement de l'élément de compensation (18) dans l'orifice de réglage (16) et actionne ainsi le dispositif de blocage (36, 38) et bloque l'élément de compensation (18).

2. Support selon la revendication 1, **caractérisé en ce que** la glissière de l'élément de compensation (18) est une glissière coulissante et que l'élément de compensation (18) comprend une coulisse(18).

3. Support selon la revendication 1, **caractérisé en ce que** le dispositif de blocage (36, 38) est conçu comme un dispositif d'encliquetage (36, 38).

4. Support selon la revendication 1, **caractérisé en ce que** l'élément d'actionnement (28) comprend un palier pivotant (30), grâce auquel il pivote contre l'élément de compensation (18).

5. Support selon la revendication 4, **caractérisé en ce que** l'élément d'actionnement (28) comprend un encliquetage (36), qui entre en prise avec l'élément d'encliquetage (38) du dispositif d'encliquetage (36, 38), lors du pivotement de l'élément d'actionnement (28).

6. Support selon la revendication 1, **caractérisé en ce que** l'élément de compensation (18) comprend un dispositif d'encliquetage (32, 34), qui maintient l'élément de compensation (18) dans une position initiale n'étant pas déplacée dans l'orifice de réglage (16) et est débloqué quand le récipient à boissons (40) pousse contre l'élément d'actionnement (28) lors de l'ajustage du récipient à boissons (40) dans l'orifice de réglage (16).

7. Support selon la revendication 1, **caractérisé en ce que** le support (10) comprend un élément à ressort (20) qui déplace l'élément de compensation (18) dans l'orifice de réglage (16).
